# DEMANDE DE BREVET EUROPEEN

(11) **EP 1 594 143 A1**
(43) Date de publication de la demande: **09.11.2005**
(21) Numéro de dépôt: 05300349.7
(22) Date de dépôt: 02.05.2005
(51) Int. Cl.: H01B 3/30, H02K 3/30

(54) **Composition thermo-adhérente pour fil de bobinage**

(30) Priorité: 03.05.2004 FR 0404762
(71) Demandeur: Nexans, 75008 Paris (FR)
(72) Inventeur: Pinto, Olivier, 69353, Lyon, Cedex 07 (FR); Fournier, Jérome, 69353, Lyon Cedex 07 (FR)
(74) Mandataire: Feray, Valérie

(57) **Abrégé**

La présente invention concerne une composition thermo-adhérente pour fil de bobinage.

L'invention est remarquable en ce que la composition thermo-adhérente comporte un polyuréthane thermoplastique de type polyester.

## Description

La présente invention concerne une composition destinée à constituer la couche thermo-adhérente d'un fil de bobinage.

L'invention trouve une application particulièrement avantageuse, mais non exclusive, dans le domaine des appareils électriques utilisant des enroulements de fils de bobinages pour créer des champs magnétiques.

Une solution aujourd'hui largement répandue pour réaliser un fil de bobinage consiste à recouvrir un conducteur isolé d'une couche externe thermo-adhérente en matériau thermoplastique. Le fil ainsi préparé est alors à même d'être bobiné conformément à l'enroulement final désiré. Les différentes spires sont ensuite solidarisées les unes aux autres en portant le fil de bobinage à une température au moins égale au point de fusion du matériau thermoplastique utilisé. Cette opération s'effectue communément, soit par effet joule en faisant passer un courant d'intensité adéquate dans le fil, soit directement par chauffage en plaçant le bobinage dans un four par exemple. Concrètement, une fois le matériau thermoplastique ramolli, il se produit une interpénétration entre les portions de couche externe respectives des spires directement adjacentes ; l'agglomération ne devenant bien évidemment effective qu'après refroidissement de l'ensemble.

Actuellement, les couches thermo-adhérentes des fils de bobinage sont généralement réalisées en matière thermoplastique à base de polyamide. S'il dispose de propriétés thermomécaniques satisfaisantes, ce type de matériau présente toutefois des forces de cohésion insuffisantes pour des applications dans lesquelles le bobinage de fils émaillé est en mouvement, comme c'est le cas par exemple avec un rotor de moteur électrique, mais également pour des applications dans lesquelles il est soumis à des températures élevées, notamment supérieures à 100°C. Dans ces cas là, l'ajout d'un vernis d'imprégnation est souvent indispensable pour conférer de bonnes propriétés de cohésion au bobinage.

En outre, les matériaux thermoplastiques à base de polyamide présentent l'inconvénient d'être difficile à mettre en oeuvre dans le cadre particulier de l'invention.

Certains polyamides et/ou leurs copolymères requièrent en effet d'être préalablement dissous dans un solvant organique pour pouvoir être appliqués sur un conducteur isolé, dans le cas où un procédé de type émaillage est employé pour réaliser la couche thermo-adhérente. Or dans la pratique, les solvants utilisés appartiennent communément à la famille des phénols, des crésols, de la N-methyl pyrrolidone ou des hydrocarbures. Il s'agit donc de substances organiques particulièrement volatiles et relativement nocives, qui sont par conséquent délicates à manipuler. De plus, en fin de processus, l'élimination complète du solvant et le séchage du matériau thermoplastique nécessitent une machinerie importante ainsi que de l'énergie en quantité.

D'autres polyamides et/ou leurs copolymères imposent quant à eux d'être chauffés à des températures très élevées afin d'atteindre une viscosité suffisante pour une enduction à l'état fondu, dans le cas où un procédé par fusion est mis en oeuvre pour former la couche thermo-adhérente. Cela conduit malheureusement à une dégradation prématurée des polyamides, avec pour conséquence ultime au niveau de la couche thermo-adhérente, la formation de défauts qui sont susceptibles de compromettre ultérieurement le bon fonctionnement du fil de bobinage.

Pour remédier à ces difficultés, il est connu d'utiliser un polyuréthane thermoplastique pour constituer la couche externe thermo-adhérente d'un fil de bobinage.

A cet égard, le document US 4 324 837 décrit un fil de bobinage composé d'un conducteur isolé qui est recouvert d'un revêtement dont la composition est essentiellement à base d'un polyuréthane thermoplastique de type éther.

Ce type de composition thermo-adhérente présente toutefois l'inconvénient d'offrir des performances satisfaisantes uniquement dans une gamme de températures relativement restreinte. Cela signifie que dès lors qu'une bobine est réalisée à partir d'un tel fil de bobinage et qu'elle est soumise à des températures de fonctionnement quelque peu extrêmes, la force d'adhésion entre les différentes spires peut s'avérer insuffisante pour garantir l'intégrité structurelle de ladite bobine, et par conséquent la constance du champ magnétique qu'elle est destinée à générer.

Aussi le problème technique à résoudre, par l'objet de la présente invention, est de proposer une composition thermo-adhérente pour fil de bobinage qui permettrait d'éviter les problèmes de l'état de la technique en offrant des propriétés thermomécaniques sensiblement améliorées.

La solution au problème technique posé consiste, selon la présente invention, en ce que la composition thermo-adhérente comporte un polyuréthane thermoplastique de type polyester.

Ce type particulier de thermoplastique présente l'avantage d'offrir de très bonnes propriétés thermomécaniques, et plus particulièrement une rigidité élevée, sur une large gamme de température s'étendant sensiblement de la température ambiante à environ 180°C. Les polyuréthanes thermoplastiques de type polyester présentent également des viscosités extrêmement basses à l'état fondu, et notamment aux températures situées légèrement au-delà de leurs points de fusion, ce qui facilite grandement leur application. Ce type particulier de thermoplastiques s'avère par ailleurs sensiblement moins cher que leurs homologues de l'état de la technique, à base de polyamide.

Selon une particularité de l'invention, le polyuréthane thermoplastique présente un module de conservation qui est supérieur à 1000Mpa à 25°C, et de préférence supérieur à 2000Mpa.

De manière particulièrement avantageuse, le module de conservation du polyuréthane thermoplastique est supérieur à 500Mpa à 100°C, et de préférence supérieur à 1000Mpa.

Conformément à une autre caractéristique avantageuse, le polyuréthane thermoplastique présente un module de conservation qui est supérieur à 100Mpa à 150°C, et de préférence supérieur à 200Mpa.

Le fait que le module élastique d'un polyuréthane thermoplastique conforme à l'invention reste élevé sur une large gamme de température, plus particulièrement au-delà de 100°C, signifie que la cohésion de la couche thermo-adhérente demeure efficiente sur toute la plage de températures de fonctionnement du fil de bobinage. De manière préférentielle, le module de conservation sera même avantageusement supérieur à 2000Mpa à 25°C, supérieur à 1000Mpa à 100°C, et supérieur à 200Mpa à 150°C.

Il est à noter que de manière très générale, les polyuréthanes thermoplastiques de type polyester présentent des modules de conservation sensiblement plus élevés que les polyuréthanes thermoplastiques de type polyéther. C'est une des raisons pour laquelle les compositions conformes à l'invention offrent des propriétés thermomécaniques bien supérieures à celles des compositions thermoplastiques à base polyéther de l'art antérieur.

Selon une autre particularité de l'invention, la température de collage du polyuréthane thermoplastique est comprise entre 150 et 250°C, et de préférence entre 150 et 200°C.

Il est en effet important que la température, au voisinage de laquelle les différentes portions de la couche thermo-adhérente sont à même de s'agglomérer, ne soit ni trop haute pour ne pas nécessiter une quantité d'énergie trop importante au moment de la fabrication du bobinage, et notamment lors de l'opération de collage des spires, ni trop basse pour de pas que les spires se désolidarisent lors de la mise en oeuvre effective de ladite bobine.

De manière particulièrement avantageuse, le polyuréthane thermoplastique de type polyester dispose d'une viscosité à l'état fondu qui est inférieure à 100 Pa.s à 300°C, et de préférence inférieure à 1 Pa.s.

Au moment de la fabrication d'une bobine à partir d'un enroulement de fil de bobinage, une basse viscosité à l'état fondu permet d'augmenter l'interpénétration des différentes portions directement adjacentes de la couche thermo-adhérente, et par conséquent de favoriser l'agglomération des spires.

Conformément à une autre caractéristique avantageuse de l'invention, le polyuréthane thermoplastique présente une phase cristalline.

Cette caractéristique permet d'obtenir une fusion très franche du matériau composant la couche thermo-adhérente, ce qui facilite encore davantage son application sur le conducteur isolé qui est destiné à devenir un fil de bobinage.

Selon une autre particularité de l'invention, la composition thermo-adhérente peut être en outre pourvue d'au moins une charge inorganique.

On pense ici à toute charge connue de l'état de la technique qui soit à même d'être dispersée dans une matrice thermoplastique. Il peut s'agir par exemple d'une charge destinée au renforcement des propriétés mécaniques du polyuréthane thermoplastique, d'une charge ignifugeante, d'une charge conductrice, d'une charge vouée à la coloration de la couche thermo-adhérente, etc.

Selon une autre particularité de l'invention, la composition thermo-adhérente peut par ailleurs être dotée d'au moins un autre polymère.

Cette caractéristique signifie simplement que le matériau destiné à composer la couche thermo-adhérente du fil de bobinage peut être constitué d'un mélange de polymères dont au moins un est un polyuréthane thermoplastique de type polyester. A titre d'exemple, il est parfaitement possible de réaliser une couche thermo-adhérente à partir d'un mélange de polyamide et de polyuréthane thermoplastique.

Bien entendu, l'invention concerne également tout fil de bobinage qui comporte un élément conducteur s'étendant à l'intérieur d'un élément isolant qui est lui-même recouvert d'une couche thermo-adhérente externe à base d'une composition telle que précédemment décrite.

D'autres caractéristiques et avantages de la présente invention apparaîtront au cours de la description des exemples qui va suivre ; ces derniers étant donnés à titre illustratif et nullement limitatif.

Il est à noter que les exemples I à III concernent des fils de bobinage qui sont typiquement destinés à être enroulés et agglomérés pour constituer des déviateurs de télévision, des bobinages de moteurs électriques, des bobines d'allumage ou de transformateurs, etc. Il est également à signaler que les fils de bobinage en question sont tous pourvus d'une couche externe thermo-adhérente réalisée en matériau thermoplastique.

### Exemple I

Le tableau 1 détaille la structure de deux fils de bobinage A et B qui diffèrent l'un de l'autre uniquement par la nature de leurs couches thermo-adhérentes respectives. En effet, on retrouve dans chaque cas un fil émaillé de 0,37mm de diamètre qui est entouré d'une couche externe thermo-adhérente de 10µm d'épaisseur. Par ailleurs, chaque fil émaillé est lui-même constitué d'un fil conducteur en cuivre de 0,335mm de diamètre, qui est recouvert d'un vernis d'émaillage se présentant sous la forme d'une couche de 17,5µm d'épaisseur.

Le fil A constitue en fait un fil de bobinage standard en ce sens que sa couche thermo-adhérente est constituée de polyamide, c'est-à-dire du matériau thermoplastique le plus communément utilisé pour les bobinages des déviateurs électromagnétiques de télévision.

Le fil B constitue quant à lui un fil de bobinage d'un nouveau type puisque sa couche thermo-adhérente est constituée d'un matériau conforme à l'invention, en l'occurrence un polyuréthane thermoplastique commercialisé sous la dénomination Estane X4995 par la société Noveon.

Afin de pouvoir établir une comparaison objective entre les fils de bobinage A et B, les capacités d'adhésion des deux types de couches thermo-adhérentes sont déterminées en utilisant un appareil de mesure DSE-2200 de la société Danske System Electronik, et en se conformant au protocole établi par cette même société.

Pour chaque échantillon à tester, il est tout d'abord procédé à un enroulement du fil de bobinage autour d'un mandrin métallique. Ce dernier est ensuite chauffé à une température définie de 200°C pendant une durée déterminée de 60 secondes, afin de ramollir la couche thermo-adhérente externe, et permettre ainsi l'agglomération entre spires jointives. L'ensemble est alors refroidi jusqu'à température ambiante au moyen d'un système de ventilation. L'enroulement ainsi constitué est ensuite débobiné à des températures croissantes en exerçant une force de traction sur l'extrémité libre dudit enroulement. La force d'arrachement nécessaire est alors mesurée en fonction de la température.

La structure de chaque fil de bobinage, ainsi que les résultats de chaque test réalisé sont regroupés dans le tableau 1 ci-dessous.

**Tableau 1**

| Echantillon | A | B |
|---|---|---|
| Diamètre du fil conducteur (mm) | 0,335 | 0,335 |
| Diamètre du fil émaillé (mm) | 0,370 | 0,370 |
| Diamètre du fil de bobinage(mm) | 0,390 | 0,390 |
| Nature de la couche thermo-adhérente | polyamide | TPU Estane X4995 |
| Temps de collage (s) | 60 | 60 |
| Température de collage (°C) | 200 | 200 |
| Température d'arrachement pour une force de 1,5N (°C) | 108 | 133 |
| Force d'arrachement à 60°C (N) | 2,0 | 3,2 |

Pour des structures de fils et des procédés de réalisation et de collage strictement identiques, le fils B caractérisé par une couche thermo-adhérente en TPU Estane X4995 présente une température d'arrachement de 133°C sous 1.5N, tandis que le fil A doté d'une couche thermo-adhérente en Polyamide PA présente une température d'arrachement de 108°C sous 1.5 N (tableau 1). Ainsi la couche de thermo-adhérent en thermoplastique polyuréthane permet d'augmenter de 23% la température d'arrachement sous 1.5N.

Par ailleurs, le fil B caractérisé par une couche thermo-adhérente en TPU Estane X4995 présente une force d'arrachement à une température de 60°C égale à 3,2N, tandis que le fil A pourvu d'une couche thermo-adhérente en polyamide PA présente à cette même température de 60°C, une force d'arrachement égale à 2,0N. Ainsi, la couche thermo-adhérente en thermoplastique polyuréthane permet d'augmenter la force d'arrachement à 60°C de 37% environ.

Le tableau 1 montre que l'utilisation de la composition thermo-adhérente comportant un polyuréthane thermoplastique de type polyester, comme celle de l'échantillon B, permet d'obtenir une amélioration de la cohésion à des température supérieure à 100°C ; cette amélioration de la cohésion étant caractérisée par une plus grande résistance à l'arrachement à haute température.

### Exemple II

Le tableau 2 détaille la structure de huit nouveaux échantillons de fils de bobinage. Les échantillons 1 à 4 sont caractérisés par le fait que leurs couches thermo-adhérentes sont réalisées respectivement en divers polyamides. Les échantillons 5 et 6 sont quant à eux remarquables en ce que les matériaux thermo-adhérents utilisés sont des polyuréthanes thermoplastiques selon l'invention. Enfin, les échantillons 7 et 8 disposent de couches thermo-adhérentes à base de polyuréthanes thermoplastiques, mais ces derniers ne sont pas conformes à l'invention.

**Tableau 2**

| Ech. | Nature de la couche thermo-adhérente | Diamètre du fils émaillé (mm) | Temps de collage (s) | Température de collage (°C) |
|---|---|---|---|---|
| 1 | PA11 | 0,37 | 30s | 200°C |
| 2 | PA PLatamid | 0,37 | 30s | 200°C |
| 3 | PA 19690 | 0,335 | 30s | 220°C |
| 4 | PA 19670 | 0,335 | 30s | 220°C |
| 5 | TPU 4995 | 0,335 | 30s | 220°C |
| 6 | TPU 4890 | 0,335 | 30s | 180°C |
| 7 | TPU 1013 | 0,37 | 30s | 200°C |
| 8 | TPU 4990 | 0,37 | 30s | 200°C |

On précise que l'origine des différents matériaux thermoplastiques mentionnés dans le tableau 2 est la suivante:
- PA11 concerne un polyamide 11 qui est commercialisé sous la dénomination Rilsan par la société Atofina.
- PA Platamid est un polyamide aliphatique qui est commercialisé sous la dénomination Platamid par la société Atofina.
- PA 19690 désigne un polyamide aromatique qui est commercialisé sous la dénomination Imidalbond 19690 par la société Nexans.
- PA 19670 fait référence à un polyamide aromatique qui est commercialisé sous la dénomination Imidalbond 19670 par la société Nexans.
- TPU 4995 concerne un polyuréthane thermoplastique de type polyester qui est commercialisé par la société Noveon.
- TPU 4890 est un polyuréthane thermoplastique de type polyester qui est commercialisé par la société Noveon.
- TPU 1013 désigne un polyuréthane thermoplastique de type polyéther qui est commercialisé par la société Noveon.
- TPU 4990 fait référence à un polyuréthane thermoplastique de type polyéther qui est commercialisé par la société Noveon.

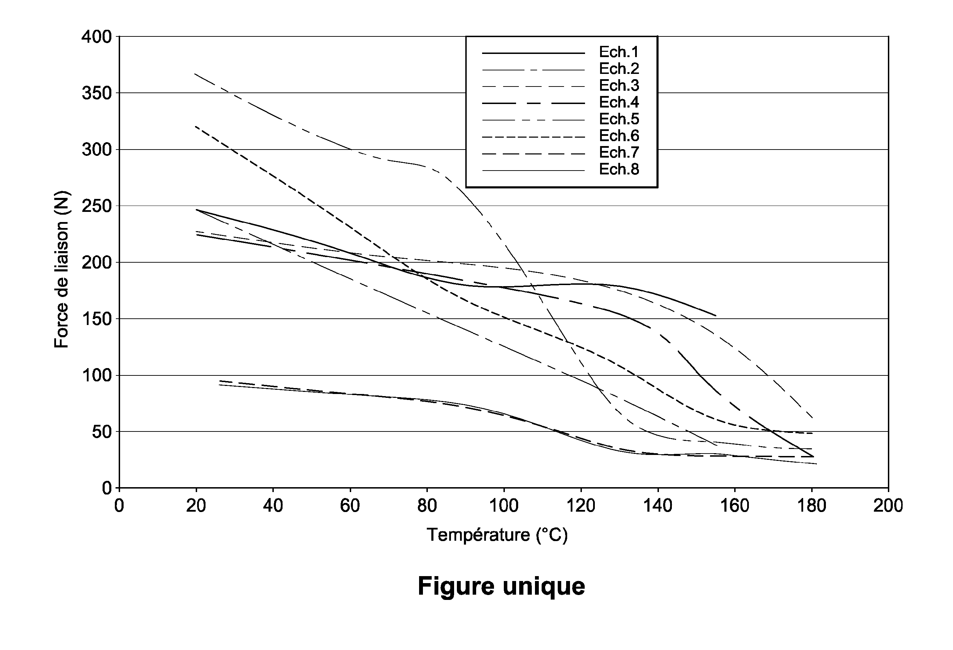

Pour pouvoir comparer les propriétés thermomécaniques de ces différents matériaux thermo-adhérents, il est mené des tests analogues à ceux réalisés dans le cadre de l'exemple I. Le tableau 3 regroupe les principales mesures effectuées, tandis que la figure unique illustre plus précisément le comportement de chaque matériau thermoplastique.

**Tableau 3**

| | | | | | | | |
|---|---|---|---|---|---|---|---|
| Ech.1 | Température (°C) | 20 | 60 | 90 | 130 | 155 | - |
| | Force d'arrachement (N) | 247 | 208 | 178,5 | 175 | 150 | - |
| Ech.2 | Température (°C) | 20 | 90 | 130 | 155 | - | - |
| | Force d'arrachement (N) | 247 | 138,3 | 77 | 34 | - | - |
| Ech.3 | Température (°C) | 20 | 130 | 155 | 180 | - | - |
| | Force d'arrachement (N) | 229 | 173 | 133 | 59 | - | - |
| Ech.4 | Température (°C) | 20 | 130 | 155 | 180 | - | - |
| | Force d'arrachement (N) | 226 | 151 | 82 | 22 | - | - |
| Ech.5 | Température (°C) | 20 | 60 | 90 | 130 | 155 | 180 |
| | Force d'arrachement (N) | 368 | 300 | 259 | 64 | 36 | 30 |
| Ech.6 | Température (°C) | 20 | 60 | 90 | 130 | 155 | 180 |
| | Force d'arrachement (N) | 322 | 232 | 165 | 105 | 57 | 44 |
| Ech.7 | Température (°C) | 26 | 60 | 90 | 130 | 155 | 180 |
| | Force d'arrachement (N) | 94 | 81 | 70 | 31 | 24 | 23 |
| Ech.8 | Température (°C) | 26 | 60 | 90 | 130 | 155 | 180 |
| | Force d'arrachement (N) | 91 | 82 | 71 | 29 | 26 | 16 |

Le tableau 3 montre que les compositions contenant du polyuréthane thermoplastique de type polyester (échantillons 5 et 6) présentent entre 20°C et 90°C des forces d'arrachement qui sont supérieures à celles des compositions de type Polyamide (échantillons 1 à 4), ainsi qu'à celles des compositions contenant du polyuréthane thermoplastique de type polyéther (échantillons 7 et 8) .

A 20°C par exemple, les compositions contenant du polyuréthane thermoplastique de type polyester (échantillons 5 et 6) présentent des forces d'arrachement qui sont de 33 à 40% supérieures à celles des échantillons 1 à 4 à base de Polyamide, et de 340% à 400% supérieures à celles des échantillons 7 et 8 en polyuréthane thermoplastique de type polyéther.

A 60°C, les compositions contenant du polyuréthane thermoplastique de type polyester (échantillons 5 et 6) présentent des forces d'arrachement qui sont de 30 à 50% supérieures à celles des échantillons 1 et 2 à base de Polyamide et de 73% supérieures à celles des échantillons 7 et 8 en polyuréthane thermoplastique de type polyéther.

A haute température, par exemple aux alentours des 180°C, les compositions contenant du polyuréthane thermoplastique de type polyester (échantillons 5 et 6) présentent des forces d'arrachement qui sont légèrement inférieures ou de même niveau que celles des échantillons 3 et 4 à base de Polyamide, mais qui sont sensiblement supérieures aux échantillons 7 et 8 à base de polyuréthane thermoplastique de type polyéther.

### Exemple III

Des mesures de modules de conservation G' sont réalisées sur deux polyuréthanes thermoplastiques de type polyester conformes à l'invention, à savoir du TPU 4890 et du TPU 4995, ainsi que sur des polyuréthanes thermoplastiques de type polyéther conformes à l'état de la technique, en l'occurrence du TPU 4990 et du TPU 1013. Ces mesures sont effectuées à différentes températures caractéristiques, c'est-à-dire 25°C, 100°C et 150°C. Les résultats sont regroupés dans le tableau 4 ci-dessous.

**Tableau 4**

| Module de conservation | G' à 25°C (MPa) | G' à 100°C (MPa) | G' à 150°C (MPa) |
|---|---|---|---|
| TPU 4890 | 2018 | 342 | 104 |
| TPU 4995 | 1310 | 682 | 3 |
| TPU 4990 | 488 | 63 | 79 |
| TPU 1013 | 507 | 59 | 75 |

On observe bien que les modules de conservation des polyuréthanes thermoplastiques de type polyester (TPU 4890, TPU 4995) sont sensiblement plus élevés que ceux des polyuréthanes thermoplastiques de type polyéther (TPU 4990, TPU 1013). Cela explique pleinement que les compositions conformes à l'invention offrent des propriétés thermomécaniques supérieures à celles des compositions thermoplastiques de l'art antérieur.

En tout état de cause, les modules de conservation des polyuréthanes thermoplastiques selon l'invention demeurent élevés sur une large gamme de températures, qui correspond avantageusement à une plage de fonctionnement classique pour un bobinage d'appareil électrique.

## Revendications

1. Composition thermo-adhérente pour fil de bobinage, **caractérisée en ce qu'**elle comporte un polyuréthane thermoplastique de type polyester.

2. Composition thermo-adhérente selon la revendication 1, **caractérisée en ce que** le module de conservation du polyuréthane thermoplastique est supérieur à 1000Mpa à 25°C, et de préférence supérieur à 2000Mpa.

3. Composition thermo-adhérente selon l'une des revendications 1 ou 2, **caractérisée en ce que** le module de conservation du polyuréthane thermoplastique est supérieur à 500Mpa à 100°C, et de préférence supérieur à 1000Mpa.

4. Composition thermo-adhérente selon l'une quelconque des revendications 1 à 3, **caractérisée en ce que** le module de conservation du polyuréthane thermoplastique est supérieur à 100Mpa à 150°C, et de préférence supérieur à 200Mpa.

5. Composition thermo-adhérente selon l'une quelconque des revendications 1 à 4, **caractérisée en ce que** la température de collage du polyuréthane thermoplastique est comprise entre 150 et 250°C, et de préférence entre 150 et 200°C.

6. Composition thermo-adhérente selon l'une quelconque des revendications 1 à 5, **caractérisée en ce que** la viscosité à l'état fondu du polyuréthane thermoplastique est inférieure à 100 Pa.s à 300°C, et de préférence inférieure à 1 Pa.s.

7. Composition thermo-adhérente selon l'une quelconque des revendications 1 à 6, **caractérisée en ce que** le polyuréthane thermoplastique présente une phase cristalline.

8. Composition thermo-adhérente selon l'une quelconque des revendications 1 à 7, **caractérisée en ce qu'**elle comporte au moins une charge inorganique.

9. Composition thermo-adhérente selon l'une quelconque des revendications 1 à 8, **caractérisée en ce qu'**elle comporte au moins un autre polymère.

10. Fil de bobinage comportant un élément conducteur s'étendant à l'intérieur d'un élément isolant, lui-même recouvert d'une couche thermo-adhérente externe, **caractérisé en ce que** ladite couche externe est à base d'une composition thermo-adhérente selon l'une quelconque des revendications précédentes.
